# EUROPÄISCHE PATENTANMELDUNG

(11) **EP 1 369 313 A1**
(43) Veröffentlichungstag der Anmeldung: **10.12.2003**
(21) Anmeldenummer: 03003355.9
(22) Anmeldetag: 13.02.2003
(51) Int. Cl.: B60R 21/20

(54) **Airbagabdeckung**

(30) Priorität: 24.05.2002 DE 10223302
(71) Anmelder: Peguform GmbH & Co. KG, 79268 Bötzingen (DE)
(72) Erfinder: Freystedt, Bernd, 79102 Freiburg (DE); Cermak, Cenek, 460 01 Lieberec 33 (CZ); Landa, Frantisek, 463 31 Chrastava (CZ); Soukup, Bretislav, 460 01 Liberec 2 (CZ)

(57) **Zusammenfassung**

Die Erfindung betrifft ein Einbauteil für Kraftfahrzeuge, insbesondere Instrumententafel, Seitenverkleidung oder Holmverkleidung, die als Sicherheitseinrichtung zur Vermeidung von Insassenverletzungen bei einem Aufprall dient. Dieses Einbauteil besteht aus einem unsichtbar hinter der Innenverkleidung (1) angebrachtem Airbag mit einer Airbagabdeckung (2). Die Airbagabdeckung ist in einem als Schusskanal (3) fungierenden Austrittsbereich zugeordnet. Bei Entfaltung eines Luftsackes öffnet sich mindestens eine Schwächungszone (6), wobei ein- oder beidseitig der Schwächungszone gelegene Bereiche der Airbagabdeckung von einem austretenden Airbag den Austrittsweg freigebend bewegbar sind und nach Entfaltung des Airbags mit dem Einbauteil verbunden bleiben. Dazu ist eine Verstärkungsstruktur (11) mit dem Trägermaterial (7) der Airbagabdeckung umspritzt und die Verstärkungsstruktur ist so aufgebaut, dass sie im Bereich der Verschwächungszone(n) (6) Verbindungselemente aufweist, die als Stege ausgeführt sein können und Scharnierwirkung haben.

## Beschreibung

Die Erfindung betrifft ein Einbauteil für Kraftfahrzeuge, insbesondere Instrumententafel, Seitenverkleidung oder Holmverkleidung, die als Sicherheitseinrichtung zur Vermeidung von Insassenverletzungen bei einem Aufprall dient. Dieses Einbauteil besteht aus einem unsichtbar hinter der Innenverkleidung angebrachtem Airbag mit einer Airbagabdeckung. Die Airbagabdeckung ist in einem als Schusskanal fungierenden Austrittsbereich zugeordnet. Bei Entfaltung eines Luftsackes öffnet sich mindestens eine Schwächungszone, wobei ein- oder beidseitig der Schwächungszone gelegene Bereiche der Airbagabdeckung von einem austretenden Airbag den Austrittsweg freigebend bewegbar sind und nach Entfaltung des Airbags mit dem Einbauteil verbunden bleiben.

Ein derartiges Einbauteil ist beispielsweise aus der DE4437773 bekannt. Das vorbekannte, als Instrumententafel ausgebildete Einbauteil weist eine Airbagabdeckung auf, die im Bereich eines Schusskanals angeordnet und einstückig mit der aus einem Kunststoffmaterial gefertigten Instrumententafel ausgebildet ist. In der Airbagabdeckung ist durch Materialverjüngung eine als Trennlinie ausgebildete Schwächungszone ausgebildet, die bei Entfaltung eines Airbags aufbricht.
Bei diesem Typ von Airbagabdeckvorrichtungen ist im Hinblick auf eine möglichst geringe Gefährdung von Insassen bei Entfaltung eines Luftsackes ein Absprengen von Teilen der Airbagabdeckung vermieden.
Weiterhin soll die bei Entfaltung des Luftsackes aufklappende Abdeckung in keinem Fall abreißen und Insassen gefährden.
Diese Aufgabe wird bei einem Einbauteil der eingangs genannten Art nach dem Stand der Technik dadurch gelöst, dass die Airbagabdeckung aus einem elastischen Material hergestellt ist und dass sich die Airbagabdeckung sowie die Schwächungszone soweit über gegenüberliegende Begrenzungen des Schusskanals hinaus erstreckt, dass ein Austreten und Entfalten des Luftsacks sichergestellt ist.
Dadurch, dass die Airbagabdeckung aus einem elastischen Material hergestellt ist, wird eine gewisse Flexibilität erreicht, die nach Öffnung der Schwächungszonen zu einem flexiblen Ausweichen der Airbagabdeckung bei Austritt eines Airbags aus dem Schusskanal führt, ohne dass die Gefahr einer Beschädigung des Airbags besteht. Um sicherzustellen, dass die Klappe nicht durch die Auslösung des Airbags komplett von der Instrumententafel getrennt wird, ist eine Verstärkung vorgesehen. Die Versteifungsplatte, auch als Trägermaterial bezeichnet, gewährleistet einerseits die Formstabilität der Airbagabdeckung und enthält den Gassackdeckel, der die eigentliche Airbagabdeckung darstellt. Die Versteifungsplatte selbst enthält noch eine Verstärkung, die beispielsweise als Blechplatte ausgebildet ist. Diese Verstärkung ist über die Versteifungsplatte mit dem Gassackdeckel und einem Teil der Instrumententafelverkleidung verpresst.

Der Erfindung liegt die Aufgabe zugrunde, ein Einbauteil der eingangs genannten Art anzugeben, das sich durch eine verhältnismäßig einfache, kostengünstige Fertigung auszeichnet und bei dem eine Gefährdung von Insassen eines mit dem Einbauteil ausgestatteten Kraftfahrzeuges sowie die Gefahr einer Beschädigung des sich entfaltenden Airbags so gut wie ausgeschlossen ist.
Erfindungsgemäß wird das Problem wie folgt gelöst: Während des Spritzgießprozesses werden Schwachstellen im unflexiblen Trägermaterial über die gesamte Klappenbreite angebracht. Dadurch kann der nachträgliche Arbeitsgang für eine zusätzliche Schicht aus Elastomer entfallen.
Die Restwanddicke des Trägermaterials muss gerade ausreichen, um zusammen mit dem Gewebe die Formstabilität der Trägerschicht zu gewährleisten und muss eine ausreichende Reißfestigkeit aufweisen, um dem Druck während des Schäumens stand zu halten. Im allgemeinen werden Drücke von bis zu 4 bar auf das Trägermaterial aufgebracht. Wenn das Gewebe mit über den Abdeckungsbereich des Trägermaterials und in den unverschwächten Träger oder in die Wände des Schusskanals eingespritzt wird, entfällt weiteres eine Fixierung des Gewebes an dem Airbag oder an einem der Träger, der die Instrumententafel im Zusammenbau in ihrer Lage im Fahrzeug fixiert.
Erfindungsgemäß befindet sich die Airbagabdeckung für ein Fahrzeug auf der unsichtbaren Seite einer Innenraumverkleidung, beispielsweise einer Instrumententafel, Lenksäule, Türseitenverkleidung, Holm oder Dachhimmel. Sie besteht aus einem Kunststoffträger, einer optional darauf angebrachten Schaumstoffschicht und einer Folie mit einer Verschwächung und/oder einer Reißnaht in dem Kunststoffträger und der Schaumschicht. Der Kunststoffträger verfügt über eine auf der Oberfläche des Airbagauslasses verteilte Anordnung von Verschwächungsgeometrien, die durch eine Verstärkungsschicht zusammengehalten werden. Diese Verstärkungsschicht kann ein Gewebe, ein Blech oder andere Metalleinlage, ein Fasermaterial, beispielsweise glasfaserverstärkter Kunststoff oder ähnliches sein.
Die als Reißnähte ausgeführten Verschwächungen sind im Bereich der Airbagabdeckung angeordnet. Sie können zusätzlich zur Verschwächung des Trägers eine Verschwächung der Schaumschicht und eines Teiles der Folie aufweisen.
Entlang eines Teiles der Schwächungszone verfügt die Verstärkung der Airbagabdeckung über ebenfalls durch Materialverjüngung ausgebildete Scharnierbereiche, die nach Aufbrechen der Schwächungszone ein Aufklappen und Umklappen der Abdeckung ermöglichen.
Die Verstärkung in Kombination mit den Reißnähten ermöglicht es, eine Klappe von mindestens der Größe der Luftsackaustrittsöffnung zu öffnen.
Die Verstärkung kann in einer weiteren Ausführungsform die Trägerteile zusammenhalten wobei die Folien- und Schaumschichten im wesentlichen die Klappenform beibehalten, wenn es zur Auslösung des Luftsacks kommt. Anstatt einer durchgehenden Verstärkungsschicht können auch Rippen oder Stege vorgesehen werden. Auch kreisförmige, elliptische, längliche, vieleckige Ausnehmungen oder Löcher können den selben Zweck erfüllen, nämlich die Gewährleistung der Formstabilität und den Zusammenhalt der Schichten zur Vermeidung von Partikelflug. Die Verstärkung wird vorzugsweise in die Trägerschicht mit eingespritzt oder auf der dem Fahrgastraum abgewandten Seite des Trägers eingeschweißt oder verklebt. Die Verstärkung muss eine geschlossene Form aufweisen, die an der Trägerschicht haftet, beispielsweise kann ein Blech oder ein beschichtetes oder getauchtes Gewebe für diesen Zweck eingesetzt werden.
Des weiteren ist durch geeignete Auswahl des Verstärkungsmaterials sicherzustellen, dass es zu keiner Dehnung des Verstärkungsmaterials kommt, vor allem in den Ausführungsbeispielen, in denen die Verstärkung zumindest abschnittsweise direkt mit der Schaumschicht in Kontakt ist. Dabei sollte die Dehnung der Verstärkung einen Maximalwert von 0,1 mm pro cm Länge nicht überschreiten.
Bei einer zweckmäßigen Weiterbildung ist vorgesehen, dass die Verstärkung im Austrittsbereich des Einbauteils hinterspritzt ist. Dadurch wird bei einer verhältnismäßig wenig aufwendigen Fertigung eine besonders haltbare Verbindung zwischen dem Einbauteil und der Airbagabdeckung erzielt.
Aus fertigungstechnischen Gründen ist es zweckmäßig, dass die Begrenzungen des Schusskanals als einstückig mit der Airbagabdeckung ausgebildete Wände ausgebildet sind.
Bei der letztgenannten Ausführung ist es zur kräftemäßigen Entkopplung der Bereiche um die Schwächungszone von den Wänden vorteilhaft, dass zwischen der einem Fahrgastinnenraum zugewandten Seite der Airbagabdeckung und den Wänden eine Entkopplungsausnehmung vorhanden ist.

Nachfolgend wird die Erfindung mit weiteren zweckmäßigen Ausgestaltungen und Vorteilen anhand eines bevorzugten Ausführungsbeispiels unter Bezug auf die Zeichnungen näher erläutert. Es zeigen:
Fig. 1 einen Schnitt einer Instrumententafel als Einbauteil für Kraftfahrzeuge mit einer geschlossenen Airbagabdeckung,
Fig. 2 eine Verstärkung in einer perspektivischen Ansicht
Fig. 3 eine Ausführung der Airbagabdeckung auf der für den Insassen unsichtbaren Seite der Fahrzeugverkleidung
Fig. 4a und Fig. 4b zeigen einen ersten Verfahrensschritt bei der Herstellung eines verstärkten Innenverkleidungsträgers für eine Airbagabdeckung
Fig. 5a und Fig. 5b zeigen einen zweiten Verfahrensschritt bei der Herstellung eines verstärkten Innenverkleidungsträgers für eine Airbagabdeckung
Fig. 6 zeigt eine erste Form der Ausführung des verstärkten Airbagdeckels
Fig. 7 zeigt eine zweite Form der Ausführung des verstärkten Airbagdeckels
Fig. 8 zeigt eine dritte Form der Ausführung des verstärkten Airbagdeckels

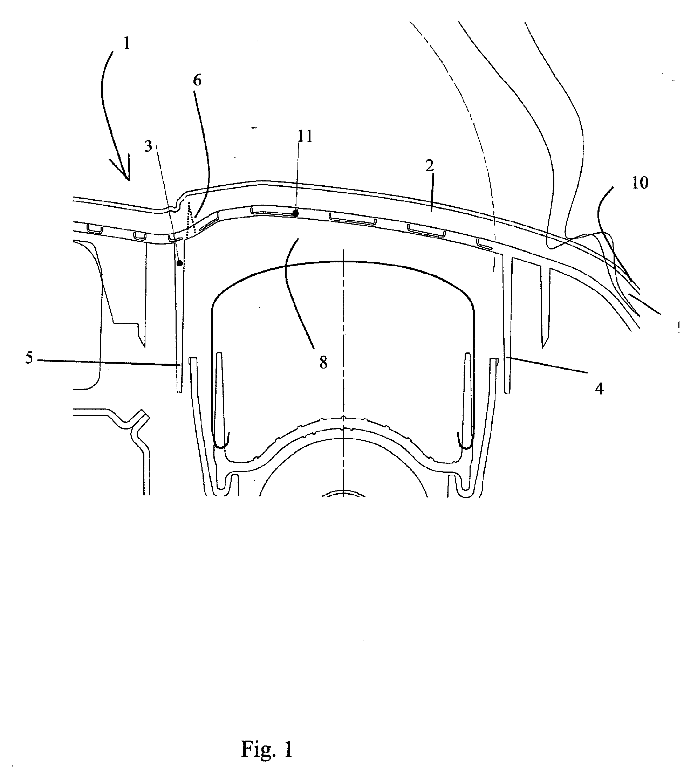

Fig. 1 zeigt einen Schnitt durch einen Airbag, den Schusskanal und der Innenverkleidung am Beispiel einer Instrumententafel. Die unter Verwendung eines Kunststoffmaterials gefertigte Instrumententafel 1 weist eine Airbagabdeckung 2 aus einem elastischen Material auf. Beispielsweise wird für die Herstellung der Airbagabdeckung ein Polypropylen-Ethylen-Propylen-Dein-Kautschuk (PP-EPDM) als elastisches Material oder SEBS verwendet. Dieses Material wird bevorzugt eingesetzt, wenn die Airbagabdeckung selbst eine gewisse Elastizität bei der Öffnung haben muss. Wenn die Airbagabdeckung als Klappe ausgeführt ist, kann zumindest das Trägermaterial auch aus einem steifen Kunststoffmaterial, wie beispielsweise einem Thermoplast, wie beispielsweise Polypropylen, Polyethylen, PVC (Polyvinylchlorid), Polyurethan, Polyester, Polyamide oder ähnliches.
Die Airbagabdeckung 2 ist im Bereich eines Schusskanals 3 angeordnet, der zur Aufnahme eines in Fig. 1 nicht dargestellten Airbags dient.
Die Airbagabdeckung 2 deckt den Schusskanal 3 ab und weist entweder eine einzige, sich vorzugsweise mittig zwischen gegenüberliegenden, den Schusskanal 3 begrenzenden Wänden 4, 5 erstreckende Schwächungszone 6 auf, die verhältnismäßig weit, beispielsweise jeweils etwa die Hälfte des Abstandes der Wände 4, 5, über jede als Begrenzung des Schusskanals 3 dienende Wand 4, 5 hinausgeht. Die Schwächungszone 6 ist beispielsweise durch Einbringen eines Schlitzes oder durch Materialausnehmung an der einem Fahrgastinnenraum abgewandten Seite der Instrumententafel 1 ausgebildet.
In einer zweiten Ausführungsform ist die Schwächungszone 6 entlang des Umfangs der Airbagabdeckung 2 angeordnet. Sie kann dabei entweder eine geschlossene, kreis- oder kegelschnittförmige oder rechteck- oder rautenförmige Form haben, oder auch offen sein, sodass ein Teil der Airbagabdeckung unverschwächt bleibt.

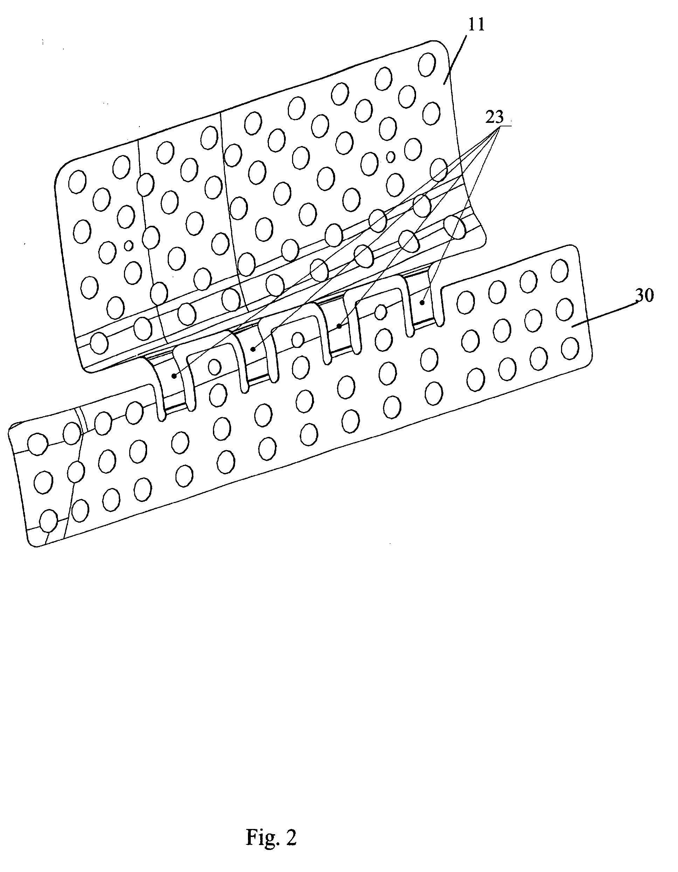

Fig. 2 zeigt in einer perspektivischen Ansicht die Verstärkung gemäß Fig. 1. In einer bevorzugten Ausführung besteht sie aus 2 Hälften, wobei 11 die Verstärkung des Airbagdeckels bezeichnet, die durch Verbindungselemente 23 an die Verstärkung der Innenverkleidung 30 gekoppelt sind. Diese Verbindungselemente können beispielsweise als Stege ausgeführt werden. Diese Verbindungselemente haben die Funktion eines Scharniers.
In einer alternativen Ausführungsvariante können auch 2 oder mehr Verstärkungen in eine Airbagabdeckung integriert werden. Wenn die Verschwächung als Schlitz ausgeführt ist, der sich bei Entfaltung des Airbags öffnet, werden vorzugsweise an beiden Seiten des Fischmauls Verstärkungen angebracht, die auch über Verbindungselemente mit der Fahrzeuginnenverkleidung verbunden sind. Dabei übt der sich entfaltende Luftsack auf die Airbagabdeckung 2 Kräfte aus, einerseits eine Druckkraft, die durch die resultierenden Druckspannungen zu einer Öffnung der Schwächungszone 6 führt und andererseits eine Scherkraft die zu einem Aufspreizen der Airbagabdeckung 2 beidseitig der Schwächungszone 6 führt. Durch das Ausbilden der Schwächungszone verhältnismäßig weit über die Ränder 4, 5 hinaus wird der Austrittsweg für den sich entfaltenden Luftsack freigegeben. Die beidseitig der Schwächungszone 6 gelegenen Bereiche der Airbagabdeckung 2 stellen sich dabei auf, wobei durch die Elastizität des Materials der Airbagabdeckung 2 sowie das Fehlen von weiteren, im Randbereich der Airbagabdeckung 2 angeordneten Schwächungszonen eine kontinuierliche Verformung der Airbagabdeckung 2 stattfindet. Dadurch werden Belastungsspitzen in der Airbagabdeckung 2 vermieden und die Gefahr eines Insassen gefährdenden Abplatzens von Teilen der Airbagabdeckung 2 so gut wie ausgeschlossen.
Um den Anforderungen des sogenannten "soft touch" zu genügen, können neben der Schichtfolge von hartem PP- Kunststoffträger, PUR-Schaum und Kaschierfolie auch die Schichten: harte PP Schalttafel, geschäumtes PP, TPO-Folie oder Kunststoffträger, PU-Schaum und Folie, ein- oder mehrschichtige Slushhaut mit Schaumschicht und Trägerschicht, Sprayhaut mit Schaumund/oder Trägerschicht oder Kombinationen der Werkstoffe in den Schichtfolgen vorgesehen werden.

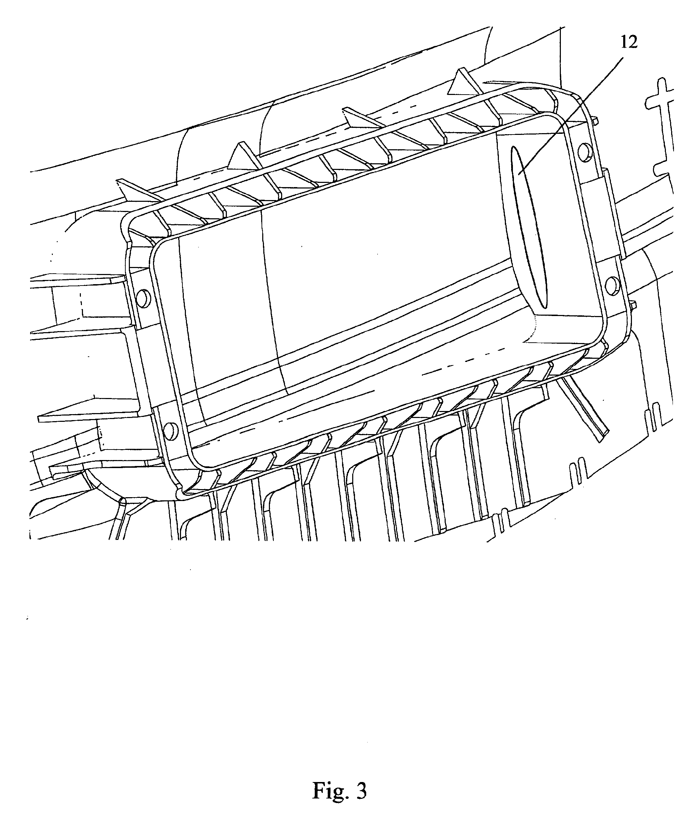

Fig. 3 zeigt eine perspektivische Ansicht einer Innenverkleidung 1 auf der für den Insassen unsichtbaren Seite derselben. Die Airbagabdeckung 2 ist im Bereich eines Schusskanals 3 angeordnet, der zur Aufnahme eines in Fig. 1 dargestellten Airbags dient. Die Airbagabdeckung kann dabei aus einer oder mehreren Kunststoffschichten bestehen.
Die Airbagabdeckung 2 deckt den Schusskanal 3 ab und weist eine einzige, sich vorzugsweise mittig zwischen gegenüberliegenden, den Schusskanal 3 begrenzenden Wänden 4, 5 erstreckende Schwächungszone 6 auf, die nicht oder nicht wesentlich über jede als Begrenzung des Schusskanals 3 dienende Wand 4, 5 hinausgeht. Die Schwächungszone 6 ist beispielsweise durch Einbringen eines Schlitzes oder durch Materialausnehmung an mindestens einer, dem Fahrgastinnenraum abgewandten Seite der Instrumententafel 1 ausgebildet. Die in Fig. 3 dargestellte, an ein Rechteck angelehnte Form kann sich abhängig von der Geometrie des Luftsacks und den Einbau- oder Designvorschriften ändern, kreisförmige, elliptische oder rautenförmige Ausführungen erfüllen denselben Zweck. Vorteilhafterweise wird eine der Längsseiten nicht verschwächt, da sie bei dem Ausklappen durch die Auslösung des Airbags weniger weit in den Fahrgastraum hineinragt und folglich die Verletzungsgefahr vermindert. Die Verringerung der Klappengröße wird auch im Rahmen der FMVSS 208 (Federal Motor Vehide Safety Standards) vorgeschrieben, um einen Kontakt eines Passagiers in nicht positionsgerechter (out of position) Stellung mit der Airbagabdeckung in jedem Fall zu vermeiden.
In Fig. 3 ist der Schusskanal mit der Airbagabdeckung integriert. Die Erfindung kann in gleicher Weise für separat angeordnete Schusskanäle verwendet werden. Der Schusskanal wird Vorteilhafterweise mit dem Träger hinterspritzt. Nicht sichtbar sind in dieser Figur die Verstärkungen, die mit hinterspritzt wurden.
Durch das Ausbilden der Schwächungszone 6 hinaus wird der Austrittsweg für den sich entfaltenden Luftsack freigegeben. Die als Klappe ausgebildete Airbagabdeckung 2 stellt sich dabei auf, wobei durch die Elastizität des Materials der Airbagabdeckung 2 sowie das Fehlen von weiteren, im Randbereich der Airbagabdeckung 2 angeordneten Schwächungszonen eine kontinuierliche Verformung der Airbagabdeckung 2 stattfindet. Die Verformung kann zu einem lokalen Ausbeulen und einem darauf folgenden Anriss nach Aufklappen führen, wobei die Verbeulungsphase durch die Wucht des austretenden Luftsacks nur sehr kurze Zeit in Anspruch nimmt. Dadurch wird aber die Belastung in der Airbagabdeckung 2 gleichmäßiger verteilt, was dem Auftreten von Belastungsspitzen entgegenwirkt. Die Gefahr eines Insassen gefährdenden Abplatzens von Teilen der Airbagabdeckung 2 ist so gut wie ausgeschlossen, da die Airbagabdeckung über die Verbindungselemente der Verstärkung mit der Innenverkleidung verbunden bleibt.
Aus Fig. 3 ist ersichtlich, dass die elastische Airbagabdeckung 2 im Austrittsbereich 8 mit einer hinterspritzten, eingegossenen oder eingeschweißten Verstärkung und den Verschwächungen im Trägermaterial bündig mit der an die Schaumschicht 9 angrenzenden Seite des Trägers 7 abschließt.
Bei dem dargestellten Ausführungsbeispiel sind die Wände 4, 5 des Schusskanals 3 einstückig mit der Airbagabdeckung 2 gefertigt. Zur kräftemäßigen Entkopplung des unmittelbar an die Schaumschicht 9 grenzenden Teils der Airbagabdeckung 2 und der Wände 4, 5 bei Entfaltung des Luftsackes ist eine Entkopplungsausnehmung (nicht dargestellt) vorhanden, wobei der an die Schaumschicht 9 grenzende Teil der Airbagabdeckung 2 und die Wände 4, 5 randseitig miteinander verbunden bleiben.
Die Verschwächung des Trägers erfolgt im Bereich der Airbagabdeckung beispielsweise durch verringerte Querschnittsabschnitte in der Spritzgussform. Diese Querschnittsabschnitte können ein rillenförmiges, punktförmiges oder nutartiges Profil aufweisen. Bohrungen oder lochartige Verschwächungen haben dieselbe Funktion. Für den nachfolgenden Auftrag von der Schaumschicht soll vermieden werden, dass der Schaum in den Bereich der Instrumententafel gepresst wird. Daher ist nach diesem Ausführungsbeispiel ein Restquerschnitt an Trägermaterial erforderlich.
Soll als Verstärkung ein Gewebe oder ein Metalleinleger eingelegt werden, welche den gesamten Öffnungsbereich des Luftsackes überdeckt, kann unter Umständen die Abdichtfunktion gegenüber dem Instrumententafelinnenraum von der Verstärkung übernommen werden. Bei dem eingelegten Gewebe kann es sich um ein Polyestergewebe, das bedingt durch die geringen Materialkosten bevorzugt zum Einsatz kommen soll, aber auch Metalldrahtgewebe, Aramidfasergewebe (Kevlargewebe, gesponnenes aromatisches Polyamid), oder ein Gewebe aus Glasfaser handeln.
Die Schwächungszone 6 erstreckt sich bei dem dargestellten Ausführungsbeispiel durch den unmittelbar an die Schaumschicht 9 grenzenden Teil der Airbagabdeckung 2, durch die Schaumschicht 9 und durch die Haut 10. Dadurch sind zum Öffnen der Airbagabdeckung 2 lediglich sehr geringe Kräfte vonnöten.

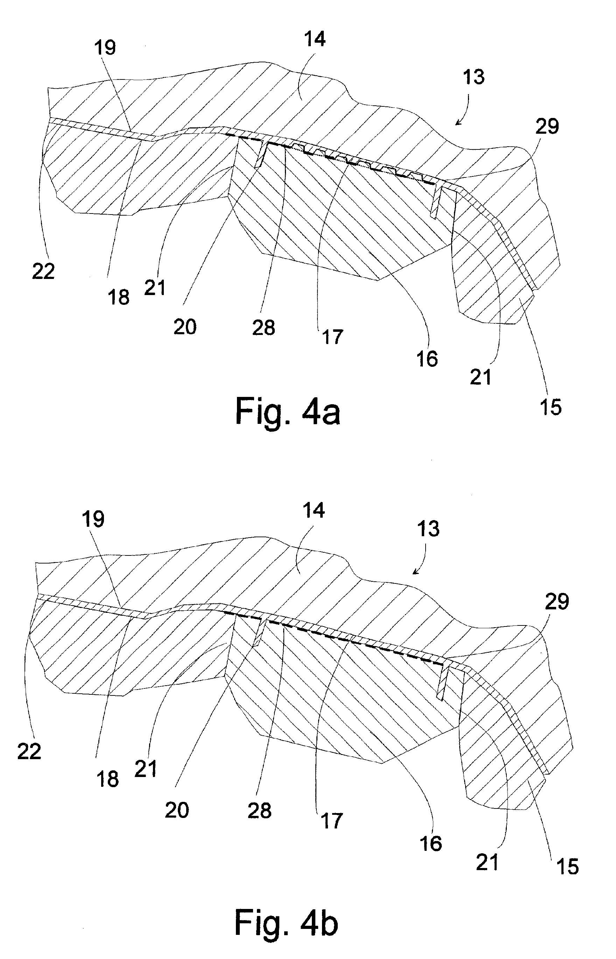

Fig. 4 bis Fig. 6 zeigen im Schnitt eine Form 13 zur Herstellung eines erfindungsgemäßen Einbauteils, beispielsweise eine Instrumententafel 1 gemäß Fig. 1 bis Fig. 4 in verschiedenen Stadien der Fertigung.
Die Form 13 verfügt über ein Formgrundteil 14, ein während des Herstellungsvorganges feststehendes erstes Formgegenteil 15 und ein auch während des Herstellungsvorganges bewegbares zweites Formgegenteil 16. Das feststehende erste Formgegenteil 15 ist bis zur Öffnung der Form 13 zur Entformung in einem festen Abstand von dem Formgrundteil 14 angeordnet.
Das bewegbare zweite Formgegenteil 16 kann Vertiefungen 17 aufweisen, die einen Übergang zwischen einer vorderseitigen Formfläche 18 und einer gegenüber der vorderseitigen Formfläche 18 zurückgesetzten Formfläche 19 schaffen. Im Bereich der vorderseitigen Formfläche 18 sind in das bewegbare zweite Formgegenteil 16 Wandhohlräume 20 eingearbeitet, die sich von der vorderseitigen Formfläche 18 wegweisend zumindest ungefähr parallel zu zwischen dem feststehenden ersten Formgegenteil 15 und dem bewegbaren zweiten Formgegenteil 16 ausgebildeten Gleitflächen 21 erstrecken.
In zumindest einen der Wandhohlräume 20 ist eine Verstärkung 28 eingelegt. Die Verstärkung, die in der Fig. 4 in den linksseitigen (auf die Figur bezogen) Wandhohlraum eingelegt wurde, erstreckt sich bis zu dem rechtsseitigen Hohlraum 20. Zwischen der Verstärkung und dem Hohlraum 20 weist das Formgegenteil 16 eine Erhöhung 29 auf, wodurch der Querschnitt des Spritzgussträgers seinen minimalen Wert annimmt. In diesem Bereich soll Träger bei Auslösung des Luftsacks versagen.
Fig. 4a und Fig. 4b zeigen das Stadium vor Einbringen von Material in die Form 13. In diesem Stadium liegt die Verstärkung 28, die auf der vorderseitigen Formfläche 18 des bewegbaren zweiten Formgegenteils 16 aufliegt, an dem Formgrundteil 14 an, so dass zwischen dem Formgrundteil 14, dem feststehenden ersten Formgegenteil 15 und dem bewegbaren zweiten Formgegenteil 16 ein Instrumententafelhohlraum 22 ausgebildet ist. Alternativ können in dem Trägermaterial noch Verschwächungen, wie in Fig. 4a dargestellt, vorgesehen werden.

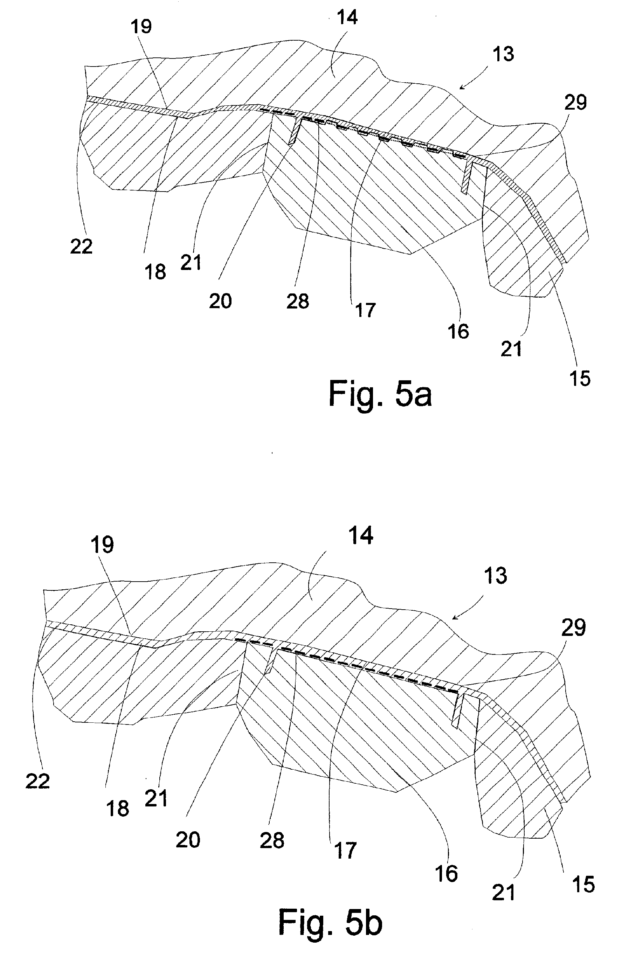

Fig. 5a und Fig. 5b zeigen das Stadium während und nach Einbringen von Kunststoffmaterial 23 wie beispielsweise glasfaserverstärktem Polypropylen (PP-GF) in die in der Anordnung gemäß Fig. 4 vorliegende Form 13 und nach Versetzen des bewegbaren zweiten Formgegenteils 16 von dem Formgrundteil 14 weg zur Ausbildung eines Abdeckhohlraums 24 zwischen dem Formgrundteil 14 und dem bewegbaren zweiten Formgegenteil 16.
Der Abdeckhohlraum 24 ist zum einen randseitig von der vorderseitigen Formfläche 18 sowie dem zuvor von der vorderseitigen Formfläche 18 bedeckten, dem Austrittsbereich 8 entsprechenden Bereich des Formgrundteils 14 begrenzt. Die Wandhohlräume 20 liegen nunmehr ebenfalls frei. Die Verstärkung ist in den linksseitigen Wandhohlraum eingelegt und erstreckt sich über den Austrittsbereich 8 bis zu der formseitigen Schwelle, durch welche die Wandstärke des Kunststoffträgers an dieser Stelle minimiert wird, um eine beliebige Verschwächung herzustellen, die beispielsweise nach dem in Fig.5a abgebildeten Schnitt darstellbar ist.
Fig. 5a zeigt das Stadium nach Einbringen von elastischem Material 25 wie beispielsweise einem Polypropylen-Ethylen-Propylen-Dein-Kautschuk (PP-EPDM) zur Ausbildung der Airbagabdeckung 2 in der Anordnung der Form 13 gemäß Fig. 5. Der Abdeckhohlraum 24 und die Wandhohlräume 20 sind nunmehr vollständig mit dem hinterspritzten elastischen Material 25 gefüllt. Die Airbagabdeckung 2 liegt dabei randseitig an der von dem Fahrgastinnenraum wegweisenden Seite der Innenverkleidung oder Instrumententafel 1 an, während die dem Fahrgastinnenraum zugewandten Seiten der Instrumententafel 1 und der Airbagabdeckung 2 im wesentlichen bündig ineinander übergehen.
Zur Entformung der Instrumententafel 1 mit der hinterspritzten Airbagabdeckung 2 wird nunmehr das bewegbare zweite Formgegenteil 16 zurückgezogen, anschließend die Form 13 geöffnet und die Instrumententafel 1 entnommen.
In einer nicht dargestellten Abwandlung ist die Schwächungszone 6 beispielsweise als Schnitt durch den an die Schaumschicht 9 grenzenden Teil der Airbagabdeckung 2 und durch die Schaumschicht 9 bis zu einer Restdicke der Haut 10 ausgeführt.
In einer weiteren nicht dargestellten - vorzugsweise bei verhältnismäßig leicht aufzureißenden Häuten 10 eingesetzten Abwandlung - erstreckt sich der Schnitt oder eine Materialausnehmung lediglich bis zu einer Restdicke in die Schaumschicht 9.

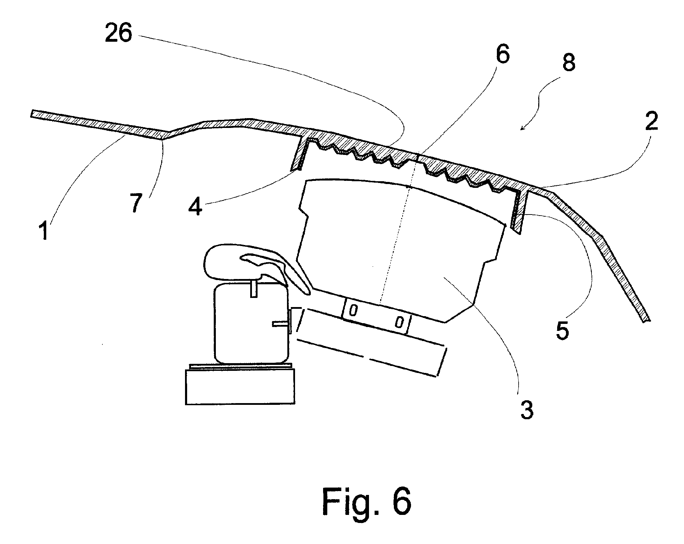

Fig. 6 bis Fig. 8 zeigen Schnitte durch weitere Ausführungsbeispiele einer Instrumententafel 1 als Einbauteil für Kraftfahrzeuge im Bereich der Airbagabdeckung 2, wobei in Zusammenhang mit den vorangehenden Ausführungsbeispielen erläuterte Bauteile mit den gleichen Bezugszeichen versehen und im weiteren zum Teil nicht näher erläutert sind.
Fig. 6 zeigt ein besonders kostengünstig zu fertigendes Ausführungsbeispiel, bei dem die Instrumententafel 1 im wesentlichen lediglich durch einen Träger 7 gebildet ist. Im Austrittsbereich 8 weist der Träger 7 eine im Verhältnis zu der übrigen Materialstärke sehr dünne Formstabilisierungslage 26 auf. Die Materialstärke der Formstabilisierungslage 26 ist dabei so eingerichtet, dass ein ungehinderter Austritt eines Luftsacks sowie eine flexible Aufspreizung der aus einem elastischen Material gebildeten Airbagabdeckung 2 entlang der Schwächungszone 6 sichergestellt ist.
Die Schwächungszone 6 liegt zentral angeordnet zwischen den beiden Wänden 4 und 5. Die Schwächungszone kann sich dabei über die eigentliche Airbagabdeckung hinaus erstrecken, um eine Öffnung nach dem Prinzip eines Fischmauls zu ermöglichen.
Die Airbagabdeckung 2 liegt an der dem Fahrgastinnenraum abgewandten Seite vollflächig an der Formstabilisierungslage 26 an, so dass ein Abplatzen von harten Materialstücken aus der Formstabilisierungslage 26 verhindert ist. Formstabilisierungslage 26 kann vorzugsweise auch als einzige Trägerschicht ausgebildet sein. Im Spritzgießprozess wird dabei eine Form mit den als Rillen oder Noppen ausgebildeten Erhöhungen verwendet. Über die Rillen oder Noppen wird je eine Verstärkung aufgelegt, die mit beiden Wänden 4,5 verbunden ist und mit eingespritzt wird. Die Verstärkung kann entweder 2-teilig oder mehrteilig sein, wenn die Verschwächungslinie 6 durch eine Erhöhung der Form ausgebildet sein soll, oder auch aus einem Stück bestehen, wobei die mittige Verschwächung in einem weiteren Bearbeitungsschritt durch Fräsen, Schneiden oder Aufheizen und Abschmelzen von Kunststoffmaterial hergestellt werden soll.
Die Auswahl der Bearbeitungsfolge ist vom verwendeten Material und den Einspritzdrücken abhängig. Bei genügendem Fliessverhalten können Querschnittsveränderungen direkt im Spritzgießprozess hergestellt werden. Temperatur, Viskosität des Kunststoffmaterials und Einspritzdruck können als die Haupteinflussparameter angesehen werden.

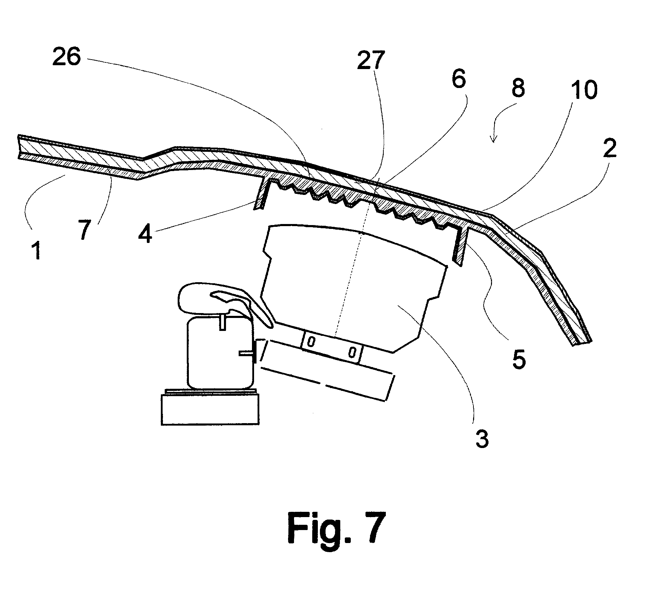

Fig. 7 zeigt ein auf dem Ausführungsbeispiel gemäß Fig. 6 aufbauendes weiteres Ausführungsbeispiel. Bei dem Ausführungsbeispiel gemäß Fig. 7 ist auf dem Träger 7 eine mit einer Haut 10 verbundene verhältnismäßig dünne Weichschaumlage 27 aufgebracht. Dadurch wird der optische und insbesondere auch der haptische Eindruck der Instrumententafel 1 gegenüber dem Ausführungsbeispiel gemäß Fig. 6 verbessert.
Die Weichschaumlage 27 sowie die Haut 10 reißen bei dem sich entfaltenden Luftsack durch die ausgeübten Kräfte in der Schwächungszone 6 auseinander.

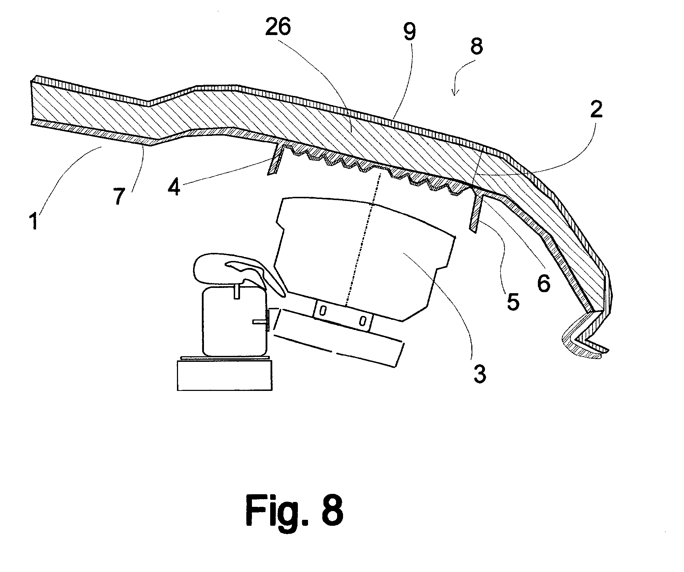

Fig. 8 zeigt dann statt einer dünnen Weichschaumlage 27 eine verhältnismäßig dicke Formstabilisierungslage 26. Die Auswahl der Schaumschicht erfolgt nach Kriterien, die sich an der Gestaltung des Innenraums orientieren und natürlich nach den Gesichtspunkten der Lage im Innenraum (Lenkrad, Holm, Instrumententafel, Sitze, Türseitenverkleidung usw.). Die Erfindung ist nicht auf eine spezielle Innenraumverkleidung beschränkt anwendbar, sondern kann bei allen Arten von Innenraumverkleidungen vorteilhaft eingesetzt werden.

### Bezugszeichenliste:

- 1.: Innenraumverkleidung (z.B. Instrumententafel)
- 2.: Airbagabdeckung
- 3.: Schusskanal
- 4.: Rand
- 5.: Rand
- 6.: Schwächungszone
- 7.: Träger
- 8.: Austrittsbereich
- 9.: Schaumschicht
- 10.: Dekorschicht (Haut)
- 11.: Verstärkung des Airbagdeckels
- 12.: Entkopplungsausnehmung
- 13.: Form
- 14.: Formgrundteil
- 15.: Formgegenteil
- 16.: Formgegenteil
- 17.: Vertiefung
- 18.: Formfläche
- 19.: Formfläche
- 20.: Wandhohlräume
- 21.: Gleitfläche
- 22.: Instrumententtafelhohlraum
- 23.: Verbindungselement
- 24.: Abdeckhohlraum
- 25.: elastisches Material
- 26.: Formstabilisierungslage
- 27.: Weichschaumlage
- 28.: Verstärkung
- 29.: Erhöhung
- 30.: Verstärkung der Innenverkleidung

## Patentansprüche

1. Airbagabdeckung für eine Verkleidung vorzugsweise im Innenraum eines Fahrzeugs, bestehend aus einer Trägerschicht (7) aus Kunststoffmaterial, einer optionalen Schaumschicht (9,26,27) und einer optionalen Dekorschicht (10), und einer mit der Trägerschicht (7) verbundenen Verstärkung (11), wobei die Trägerschicht und die Verstärkung unterschiedliche Materialkombinationen sein können und die Verstärkung sich über einen Teil der Airbagabdeckung (2) und einen Teil der angrenzenden Innenverkleidung erstreckt, **gekennzeichnet dadurch, dass** die Verstärkung (11) mit dem Trägermaterial (7) umspritzt ist.

2. Airbagabdeckung nach Anspruch 1, **gekennzeichnet dadurch, dass** die Verstärkung mindestens einen Bereich aufweist, der Verbindungselemente (23) enthält.

3. Airbagabdeckung nach Anspruch 2, **gekennzeichnet dadurch, dass** die Verbindungselemente als Stege ausgeführt sind.

4. Verfahren zur Herstellung einer Airbagabdeckung für eine Verkleidung vorzugsweise im Innenraum eines Fahrzeugs bestehend aus den Schritten, Einlegen einer Verstärkungsstruktur in eine Spritzgussform, Umspritzen der Verstärkungsstruktur in der Spritzgussform mittels flüssigem oder zähflüssigen Polymermaterial, Auskühlen des Polymermaterials in der Form, Entnahme oder Ausstoßen der Airbagabdeckung mit dem Innenverkleidungsteil.

5. Verfahren nach Anspruch 4, **gekennzeichnet dadurch, dass** gleichzeitig mit dem Umspritzen der Verstärkung eine Füllung der Kavitäten für die Ränder (4,5), welche die Begrenzung des Schusskanals (3) bilden, erfolgt.

6. Verfahren nach Anspruch 4, **gekennzeichnet dadurch, dass** das Trägermaterial in einem Folgeschritt in eine Schäumform eingelegt wird, um eine Schaumschicht auf die Trägerschicht aufzutragen.

7. Verfahren nach Anspruch 6, **gekennzeichnet dadurch, dass** eine Dekorschicht in die Schäumform eingelegt wird, bevor der Schäumvorgang beginnt.

8. Verfahren nach Anspruch 4, **gekennzeichnet dadurch, dass** Gewebe, textile Fasem oder Polsterungen auf das Innenverkleidungsteil geklebt werden.

9. Verfahren nach einem der Ansprüche 4 bis 8, **gekennzeichnet dadurch, dass** nach den vorhergehenden Verfahrensschritten Verschwächungen durch Fräsen oder durch Laserstrahl angebracht werden.

10. Verfahren nach Anspruch 4, **gekennzeichnet dadurch, dass** die Spritzgussform Erhöhungen aufweist, wodurch es zu Verschwächungen im Trägermaterial kommt.
